# EUROPEAN PATENT APPLICATION

(11) **EP 4 282 911 A1**
(43) Date of publication of application: **29.11.2023**
(21) Application number: 21921208.1
(22) Date of filing: 22.11.2021
(51) Int. Cl.: C08K 5/098, C08L 59/00, C08K 3/08

(54) **POLYACETAL RESIN COMPOSITION**

(30) Priority: 25.01.2021 JP 2021009803
(71) Applicant: MITSUBISHI GAS CHEMICAL COMPANY, INC., Chiyoda-ku Tokyo 100-8324 (JP)
(72) Inventor: MICHIBA Kiyonori, Yokkaichi-shi, Mie 510-0886 (JP); SUNAGA Daisuke, Tokyo 100-8324 (JP)
(74) Representative: Müller-Boré & Partner Patentanwälte PartG mbB
(86) International application number: PCT/JP2021/042770
(87) International publication number: WO 2022/158105

(57) **Abstract**

The present invention provides a polyacetal resin composition that is used by being kneaded with metal powders, said polyacetal resin composition comprising 100 parts by weight of a polyacetal resin (A) and 0.15 to 10.0 parts by weight of a fatty acid metal salt (B), wherein the fatty acid metal salt (B) is fatty acid zinc, fatty acid magnesium, or a combination thereof.

## Description

### Technical Field

The present invention relates to a polyacetal resin composition that is used by being kneaded with metal powders. In addition, the present invention relates to: a method for producing a polyacetal resin composition; a metal resin composition comprising a polyacetal resin composition and metal powders; and a method for producing a powder injection molded product, in which a polyacetal resin composition is used as a binder resin composition.

### Background Art

In recent years, a powder injection molding method has been used to produce a metal molded product by injection molding a kneaded body obtained by kneading a binder resin composition and metal powders. The powder injection molding method is excellent in terms of the degree of freedom of the shape and material of a molded product, and dimensional accuracy.

Polyacetal resin has been widely used as an engineering plastic, utilizing its mechanical properties, friction and/or wear properties, chemical resistance, heat resistance, or electrical properties. Since such a polyacetal resin can be easily removed by combustion and the ash residue can be reduced, the polyacetal resin is preferable as a binder resin composition for metal powders in the powder injection molding method.

Patent Literature 1 discloses an invention providing a polyacetal resin composition having excellent extrudability, thermal stability, and suppression of foreign matters, and further, having excellent dispersibility with metal powders, and a metal resin composition comprising metal powders and a polyacetal resin composition, wherein the metal composition has excellent extrudability and thermal stability, has a low foreign matter content, and further, the metal powders are effectively dispersed therein. This polyacetal resin composition comprises (A) 100 parts by mass of a polyacetal resin, (B) 0.005 to 0.2 parts by mass of a nitrogen-containing compound, and (C) 0.01 to 0.8 parts by mass of a fatty acid metal salt, wherein a melt flow index measured under conditions of 190°C and 2.16 kg is 60 g/10 minutes or more and less than 200 g/10 minutes, and the ratio of the content of (C) the fatty acid metal salt to the content of (B) the nitrogen-containing compound, ((C)/(B)), is 1 to 15.

### Citation List

### Patent Literature

Patent Literature 1: JP Patent Publication (Kokai) No. 2020-041133 A

### Summary of Invention

### Technical Problem

When a polyacetal resin composition is used by being kneaded with metal powders (specifically, when a polyacetal resin composition is used as a binder for metal powders), the obtained kneaded body (metal resin composition) is required to have two properties, namely, excellent bending strain and fluidity.

Under such circumstances, it is an object of the present invention to provide a polyacetal resin composition that is used by being kneaded with metal powders. Moreover, the present invention provides: a method for producing a polyacetal resin composition; a metal resin composition comprising a polyacetal resin composition and metal powders; and a method for producing a powder injection molded product, in which a polyacetal resin composition is used as a binder resin composition.

### Solution to Problem

The present invention includes the following aspects [1] to [8].
[1] A polyacetal resin composition that is used by being kneaded with metal powders, comprising:
   100 parts by weight of a polyacetal resin (A), and
   0.15 to 10.0 parts by weight of a fatty acid metal salt (B), wherein
   the fatty acid metal salt (B) is fatty acid zinc, fatty acid magnesium, or a combination thereof.
[2] The polyacetal resin composition according to the above [1], wherein the fatty acid of the fatty acid metal salt (B) is a fatty acid having 12 to 28 carbon atoms.
[3] The polyacetal resin composition according to the above [1], wherein the fatty acid metal salt (B) is at least one selected from the group consisting of magnesium laurate, zinc laurate, magnesium stearate, zinc stearate, magnesium behenate, zinc behenate, magnesium montanate, and zinc montanate.
[4] The polyacetal resin composition according to any one of the above [1] to [3], which comprises 1.0 to 10.0 parts by weight of the fatty acid metal salt (B).
[5] The polyacetal resin composition according to any one of the above [1] to [4], wherein the melt flow rate of the polyacetal resin (A) is 40 to 100 g/10 minutes (2.16 kg, 190°C).
[6] A metal resin composition, comprising:
   the polyacetal resin composition according to any one of the above [1] to [5], and
   metal powders.
[7] A method for producing a polyacetal resin composition that is used by being kneaded with metal powders, comprising:
   a step of melt-kneading 100 parts by weight of a polyacetal resin (A) and 0.15 to 10.0 parts by weight of a fatty acid metal salt (B), wherein
   the fatty acid metal salt (B) is fatty acid zinc, fatty acid magnesium, or a combination thereof.
[8] A method for producing a powder injection molded product, comprising a step of injecting a kneaded body obtained by melt-kneading metal powders and a binder resin composition into a mold, wherein
   the binder resin composition is the polyacetal resin composition according to any one of the above [1] to [5],

### Advantageous Effects of Invention

By kneading the polyacetal resin composition of the present invention with metal powders and then using it, the obtained kneaded body (metal resin composition) has two properties, namely, excellent bending strain and fluidity.

### Description of Embodiments

### [Polyacetal resin composition]

The polyacetal resin composition of the present invention comprises 100 parts by weight of a polyacetal resin (A), and 0.15 to 10.0 parts by weight of a fatty acid metal salt (B), wherein the fatty acid metal salt (B) is fatty acid zinc, fatty acid magnesium, or a combination thereof. The polyacetal resin composition of the present invention is used by being kneaded with metal powder (C), and the present polyacetal resin composition is a binder resin composition for the metal powder (C). The present polyacetal resin composition may be in a solid, powder, strand or pellet form.

The method for producing a polyacetal resin composition of the present invention comprises a step of melt-kneading 100 parts by weight of a polyacetal resin (A) and 0.15 to 10.0 parts by weight of a fatty acid metal salt (B), wherein the fatty acid metal salt (B) is fatty acid zinc, fatty acid magnesium, or a combination thereof. The melt kneading step is carried out at a temperature at which the polyacetal resin composition is melted, or a higher temperature (in general, at a temperature of 180°C or higher).

### [Polyacetal resin (A)]

The polyacetal resin (A) is a polymer having an acetal bond: -O-CRH- (wherein R represents a hydrogen atom or an organic group) as a repeating unit, and in general, the polyacetal resin (A) has an oxymethylene group (-OCH₂-) as a main constituent unit, wherein R is a hydrogen atom. The polyacetal resin (A) may be a copolymer (block copolymer) or a terpolymer, comprising one or more types of repeating constituent units other than the oxymethylene group. Moreover, the polyacetal resin (A) may not only have a linear structure, but may also have a branched or cross-linked structure that is generated by using a glycidyl ether compound, an epoxy compound, an allyl ether compound, or the like, as a comonomer and/or a termonomer. Examples of the constituent unit other than the oxymethylene group may include optionally branched oxyalkylene groups containing 2 or more and 10 or less carbon atoms, such as oxyethylene groups (-OCH₂CH₂- or -OCH(CH₃)-), oxypropylene groups (-OCH₂CH₂CH₂-, -OCH(CH₃)CH₂-, or -OCH₂CH(CH₃)-), and oxybutylene groups (-OCH₂CH₂CH₂CH₂-, - OCH(CH₃)CH₂CH₂-, -OCH₂CH(CH₃)CH₂-, -OCH₂CH₂CH(CH₃)-, -OCH(C₂H₅)CH₂-, or -OCH₂CH(C₂H₅)-). Among these groups, an optionally branched oxyalkylene group containing 2 or more and 4 or less carbon atoms, or an oxyethylene group (-OCH₂CH₂-) is preferable. Furthermore, the content of comonomers (i.e. constituent units other than the oxymethylene group) in the polyacetal resin (A) is 0.1% by weight to 20% by weight, 0.5% to 20% by weight, 1.0% to 20% by weight, 2.0% to 20% by weight, 4.0% to 20% by weight, 1.0% to 15% by weight, 1.0% to 10% by weight, 1.0% to 15% by weight, 1.0% to 10% by weight, 2.0% to 15% by weight, 2.0% to 10% by weight, 2.0% to 8.0% by weight, 4.0% to 10% by weight, or 4.0% to 8.0% by weight, based on the weight of the polyacetal resin (A).

The polyacetal resin (A) may be either a polyacetal resin after end stabilization, or a polyacetal resin before end stabilization. That is to say, the polyacetal resin (A) after end stabilization and the fatty acid metal salt (B) may be melt-kneaded, so as to prepare a polyacetal resin composition. Otherwise, the polyacetal resin (A) before end stabilization and the fatty acid metal salt (B) may be melt-kneaded, so as to prepare a polyacetal resin composition.

Preferably, the polyacetal resin (A) is a copolymer of a cyclic acetal such as trioxane or tetraoxane, and ethylene oxide or 1,3-dioxolane. For example, the polyacetal resin (A) is an acetal copolymer, in which 1,3-dioxolane is used as a comonomer.

The polyacetal resin (A) has a melt flow rate as measured in accordance with ASTM-D1238 (conditions: 190°C and a load of 2.16 kg) that is 1 to 100 g/10 minutes, 10 to 100 g/10 minutes, 15 to 100 g/10 minutes, 20 to 100 g/10 minutes, 25 to 100 g/10 minutes, 30 to 100 g/10 minutes, 35 to 100 g/10 minutes, 40 to 100 g/10 minutes, 45 to 100 g/10 minutes, or 45 to 95 g/10 minutes. Preferably, the polyacetal resin (A) has a melt flow rate of 30 to 100 g/10 minutes, 40 to 100 g/10 minutes, or 45 to 95 g/10 minutes.

The method for producing a polyacetal resin (A) is not particularly limited, and the polyacetal resin (A) is produced according to a known method. For example, a polyacetal resin (A) comprising, as constituent units, an oxymethylene group and an oxyalkylene group containing 2 to 4 carbon atoms is produced by copolymerizing a cyclic acetal comprising an oxymethylene group, such as formaldehyde trimer (trioxane) or tetramer (tetraoxane), with a cyclic acetal comprising an oxyalkylene group containing 2 to 5 carbon atoms, such as ethylene oxide, 1,3-dioxolane, 1,3,6-trioxocane, or 1,3-dioxepane.

For example, the polyacetal resin (A) can be obtained by a method of subjecting a cyclic acetal of an oxymethylene group and a cyclic acetal comprising an oxyalkylene group containing 2 to 5 carbon atoms as a comonomer to bulk polymerization using a polymerization catalyst. A polymerization catalyst, and also, for inactivation of the polymerization growth end, a reaction terminator may be used, as necessary. In addition, in order to regulate the molecular weight of the polyacetal resin (A), a molecular weight regulator may be used, as necessary.

The type and amount of such a polymerization catalyst, a reaction terminator, or a molecular weight regulator are not limited, as long as the effects of the present invention are not inhibited thereby. Thus, a known polymerization catalyst, reaction terminator, and molecular weight regulator may be used, as appropriate.

Examples of the polymerization catalyst may include: Lewis acids such as boron trifluoride, tin tetrachloride, titanium tetrachloride, phosphorus pentachloride, phosphorus pentafluoride, arsenic pentafluoride and antimony pentafluoride, or complex compounds or salt compounds of these Lewis acids; protic acids such as trifluoromethanesulfonic acid or perchloric acid; esters of protic acids, such as an ester of perchloric acid and lower aliphatic alcohol; anhydrides of protic acids, such as a mixed anhydride of perchloric acid and lower aliphatic carboxylic acid; and triethyloxonium hexafluorophosphate, triphenylmethyl hexafluoroarsenate, acetyl hexafluoroborate, heteropoly acid or an acidic salt thereof, isopoly acid or an acidic salt thereof, and perfluoroalkyl sulfonic acid or an acidic salt thereof.

Examples of the reaction terminator may include trivalent organophosphorus compounds, amine compounds, alkali metals, alkaline earth metal hydroxides, and combinations thereof. Examples of the molecular weight regulator may include methylal, methoxymethylal, dimethoxymethylal, trimethoxymethylal, and oxymethylene di-n-butyl ether.

Further, known additives such as antioxidants, heat stabilizers, coloring agents, nucleating agents, plasticizers, fluorescent brighteners, sliding agents, antistatic agents, ultraviolet absorbers, or light stabilizers may be added to the polyacetal resin (A), as necessary.

### [Fatty acid metal salt (B)]

The fatty acid metal salt (B) is fatty acid zinc, fatty acid magnesium, or a combination thereof. The fatty acid metal salt (B) is a salt of fatty acid containing 12 to 28 carbon atoms with zinc or magnesium. Examples of the fatty acid containing 12 to 28 carbon atoms may include lauric acid, palmitic acid, stearic acid, behenic acid, montanoic acid, 12-hydroxystearic acid, oleic acid, and erucic acid. Preferably, the fatty acid zinc is zinc stearate, zinc laurate, zinc behenate or zinc montanate, and the fatty acid magnesium is magnesium laurate, magnesium stearate, magnesium behenate, or magnesium montanate.

The content of the fatty acid metal salt (B) in the polyacetal resin composition is 0.15 to 10.0 parts by weight, with respect to 100 parts by weight of the polyacetal resin (A). Besides, the content of the fatty acid metal salt (B) in the polyacetal resin composition may also be 0.15 to 8.0 parts by weight, 0.15 to 6.0 parts by weight, 0.2 to 10.0 parts by weight, 0.2 to 8.0 parts by weight, 0.2 to 6.0 parts by weight, 0.3 to 10.0 parts by weight, 0.3 to 8.0 parts by weight, 0.3 to 6.0 parts by weight, 0.5 to 10.0 parts by weight, 0.5 to 8.0 parts by weight, 0.5 to 6.0 parts by weight, 1.0 to 10.0 parts by weight, 1.0 to 8.0 parts by weight, 1.0 to 6.0 parts by weight, 2.0 to 10.0 parts by weight, 2.0 to 8.0 parts by weight, or 2.0 to 6.0 parts by weight.

### [Method for producing polyacetal resin composition]

The method for producing a polyacetal resin composition of the present invention comprises a melt kneading step of melt-kneading a polyacetal resin (A) and a fatty acid metal salt (B). The melt kneading can be carried out using, for example, a Banbury mixer, a roll, a plapender, a single screw extruder or a twin screw extruder, or a kneader.

Conditions applied in the melt kneading step, such as a temperature and a pressure, may be selected, as appropriate, while taking into consideration conventionally known methods for producing a polyacetal resin composition. For instance, the melt kneading step may be carried out at a temperature that is equal to or higher than the melting temperature of a polyacetal resin. In general, the melt kneading step is carried out at a temperature of preferably 180°C to 240°C, more preferably 200°C to 220°C.

The polyacetal resin (A) and the fatty acid metal salt (B) may be melt-kneaded at once to prepare a polyacetal resin composition, or the fatty acid metal salt (B) may be divided and added to the polyacetal resin (A) in a single melt kneading step, so that the aforementioned content of the fatty acid metal salt (B) can be finally obtained. Otherwise, a polyacetal resin composition comprising a high concentration of the fatty acid metal salt (B) may be once prepared, and then, the prepared polyacetal resin composition may be further kneaded with another polyacetal resin, so that the polyacetal resin composition may be diluted.

The fatty acid metal salt (B) comprised in the polyacetal resin composition is set to be fatty acid zinc, fatty acid magnesium, or a combination thereof, and the content of the fatty acid metal salt (B) is set to be 0.15 to 10.0 parts by weight, with respect to 100 parts by weight of the polyacetal resin (A), so that a kneaded body (metal resin composition) of the polyacetal resin composition and the metal powder (C) can possess two properties, namely, excellent bending strain and fluidity.

### [Metal resin composition]

The metal resin composition of the present invention comprises the above described polyacetal resin composition and the metal powder (C). The metal resin composition is produced by melt-kneading the above-described polyacetal resin composition and the metal powder (C). The melt kneading step is carried out at a temperature that is equal to or higher than the melting temperature of the polyacetal resin composition (in general, at a temperature of 180°C or higher). The metal resin composition (kneaded body) may be in a solid, powder, strand, or pellet form.

The metal resin composition has two properties, namely, excellent bending strain and fluidity. The bending strain (%) is measured as a point of maximum bending strength of a metal resin composition by performing a three-point bending test on a molded piece of the metal resin composition at a bending speed of 2 mm/min, using an apparatus such as, for example, "Autograph (registered trademark) AGS-X" manufactured by Shimadzu Corporation. The fluidity (g/10 minutes) is measured in accordance with ASTM-D1238, at a temperature of 190°C and at a load of 10 kg. The metal resin composition has a bending strain of 1.0% or more and a fluidity of 10 g/10 minutes or more. In addition, the metal resin composition has a bending strain of 1.0% to 15%, 1.0% to 12%, 1.0% to 10%, 1.0% to 9.5%, or 1.1% to 9.1%, and also has a fluidity of 11 to 2000 g/10 minutes, 11 to 1800 g/10 minutes, or 11 to 1700 g/10 minutes.

### [Metal powder (C)]

The metal of the metal powder (C) is iron, aluminum, magnesium, cobalt, zinc, copper, nickel, titanium, tungsten, or a metal compound or a metal alloy that is based on these metals. Preferably, the metal powder (C) is a stainless steel (SUS) powder, and the stainless steel is austenitic stainless steel (SUS300 series), ferritic and martensitic stainless steel (SUS400 series), or precipitation hardening stainless steel (SUS600 series). The particle diameter (average particle diameter) of the metal powder (C) is not particularly limited, and the metal powder (C) has a particle diameter of 1 to 100 µm, 1 to 50 µm, 1 to 25 µm, or 1 to 10 µm, as measured by electron micrography, laser diffraction/scattering particle size distribution measurement, etc.

The content of the metal powder (C) in the metal resin composition is 60% to 95% by weight, 65% to 95% by weight, 70% to 95% by weight, 80% to 95% by weight, or 85% to 95% by weight, based on the weight of the metal resin composition.

### [Method for producing powder injection molded product]

The method for producing a powder injection molded product of the present invention comprises a step of injecting a kneaded body obtained by melt-kneading the metal powder (C) and a binder resin composition into a mold, wherein the binder resin composition is the above-described polyacetal resin composition. Moreover, the present production method may comprise a step of removing the binder resin composition from the molded kneaded body by heating or with the use of gaseous acid, etc., in a degreasing furnace, and a step of subjecting the molded body to a sintering treatment in a sintering furnace to form a powder injection molded product.

### [Optional components]

Other optional additives such as stabilizers, nucleating agents, mold release agents, fillers, pigments, lubricants, plasticizers, ultraviolet absorbers, flame retardants, or flame retardant promoters may be added to the polyacetal resin composition, as needed, to such an extent that the purpose of the present invention is not impaired. Examples of such optional additives may include glass fibers, glass flakes, glass beads, wollastonite, mica, talc, boron nitride, calcium carbonate, kaolin, silicon dioxide, clay, asbestos, silica, diatomaceous earth, graphite, molybdenum disulfide, glass fibers, middle fibers, potassium titanate fibers, polon fibers, carbon fibers, aramid fibers, potassium titanate whisker, carbon black, and pigment.

### Examples

Hereinafter, the present invention will be described in the following examples. The below-mentioned materials were used in Examples and Comparative Examples as described below.

### [Polyacetal resin (A)]

As a polyacetal resin (A-1), the polyacetal resin "Iupital (registered trademark) F40-05" manufactured by Mitsubishi Engineering-Plastics Corporation, was used. The melt flow rate of the polyacetal resin (A-1) is 47 g/10 minutes (as measured in accordance with ASTM-D1238, at a load of 2.16 kg and a temperature of 190°C).

As a polyacetal resin (A-2), the polyacetal resin "Iupital (registered trademark) F50-05" manufactured by Mitsubishi Engineering-Plastics Corporation, was used. The melt flow rate of the polyacetal resin (A-2) is 90 g/10 minutes (as measured in accordance with ASTM-D1238, at a load of 2.16 kg and a temperature of 190°C).

### [Fatty acid metal salt (B)]

Fatty acid metal salt (B-1) is the magnesium stearate "MAGNESIUM STEARATE" manufactured by NOF CORPORATION.
Fatty acid metal salt (B-2) is the zinc stearate "ZINC STEARATE" manufactured by NOF CORPORATION.
Fatty acid metal salt (B-3) is the zinc laurate "ZS-3" manufactured by NITTO KASEI KOGYO K.K.
Fatty acid metal salt (B-4) is the zinc behenate "ZS-7" manufactured by NITTO KASEI KOGYO K.K.
Fatty acid metal salt (B-5) is the zinc montanate "ZS-8" manufactured by NITTO KASEI KOGYO K.K.
Fatty acid metal salt (B-6) is the calcium stearate "CALCIUM STEARATE" manufactured by NOF CORPORATION.

### [Metal powder (C)]

Metal powder (C) is SUS630 Powder (average particle diameter: 10 µm) manufactured by Epson Atmix Corporation.

### [Example 1]

As shown in Table 1, the polyacetal resin composition of Example 1 was prepared by adding 0.15 parts by weight of the magnesium stearate (B-1) to 100 parts by weight of the polyacetal resin (A-1), and then melt-kneading the obtained mixture in a kneading machine "Laboplast Mill (registered trademark) 4C150" manufactured by Toyo Seiki Seisaku-sho, Ltd., at a preset temperature of 220°C and at a rotation speed of 30 rpm under a nitrogen flow for 20 minutes. Thereafter, 20 g of this polyacetal resin composition (i.e. 10% by weight, based on the weight of the kneaded body) and 180 g of the metal powder (C) (i.e. 90% by weight, based on the weight of the kneaded body) were kneaded in a kneading machine "Laboplast Mill (registered trademark) 4C150" manufactured by Toyo Seiki Seisaku-sho, Ltd., at a preset temperature of 180°C and at a rotation speed of 60 rpm under a nitrogen flow for 40 minutes, and thereafter, the resulting mixture was cooled and solidified, thereby producing a kneaded body (metal resin composition). This kneaded body was crushed using a grain cutter "GRANCUTTER (registered trademark) SPC-400" manufactured by HARMO Co., Ltd.

### [Examples 2 to 47]

The polyacetal resin (A) and the fatty acid metal salt (B) were melt-kneaded in the same manner as that of Example 1, while the type and mixed amount (part by weight) of the polyacetal resin (A) and the fatty acid metal salt (B), as shown in Tables 1 to 3, were applied, so as to prepare the polyacetal resin compositions of Examples 2 to 47.

In the same manner as that of Example 1, in each of Examples 2 to 41, 20 g (10% by weight) of the polyacetal resin composition and 180 g (90% by weight) of the metal powder (C) were kneaded in the above-described kneading machine at a preset temperature of 180°C and at a rotation speed of 60 rpm under a nitrogen flow for 40 minutes, and thereafter, the obtained mixture was cooled and solidified, thereby producing a kneaded body (metal resin composition). On the other hand, in each of Examples 42 to 47, 60 g (30% by weight) of the polyacetal resin composition and 140 g (70% by weight) of the metal powder (C) were kneaded in the above-described kneading machine at a preset temperature of 180°C and at a rotation speed of 60 rpm under a nitrogen flow for 40 minutes, and thereafter, the obtained mixture was cooled and solidified, thereby producing a kneaded body (metal resin composition). The kneaded bodies of Examples 2 to 47 were each crushed using the above-described grain cutter.

### [Comparative Examples 1 to 12]

In the same manner as those of the Examples, only the polyacetal resin (A) was melt-kneaded (Comparative Examples 1 and 2), or the polyacetal resin (A) and the fatty acid metal salt (B) were melt-kneaded (Comparative Examples 3 to 12), while the type and mixed amount (part by weight) of the polyacetal resin (A) and the fatty acid metal salt (B), as shown in Table 4, were applied, so as to prepare the polyacetal resin compositions of Comparative Examples 1 to 12. In the same manner as those of the Examples, melt kneading was carried out in a kneading machine "Laboplast Mill (registered trademark) 4C150" manufactured by Toyo Seiki Seisaku-sho, Ltd., at a preset temperature of 220°C and at a rotation speed of 30 rpm under a nitrogen flow for 20 minutes. Moreover, in each of Comparative Examples 1 to 12, 20 g (10% by weight) of the polyacetal resin composition and 180 g (90% by weight) of the metal powder (C) were kneaded in the above-described kneading machine at a preset temperature of 180°C and at a rotation speed of 60 rpm under a nitrogen flow for 40 minutes, and thereafter, the obtained mixture was cooled and solidified, thereby producing a kneaded body (metal resin composition). The obtained kneaded bodies were crushed using the above-described grain cutter. It is to be noted that, in Comparative Example 11, a kneaded body was prepared according to the composition of Example 5 of the aforementioned Patent Literature 1.

The bending strain and fluidity of the kneaded bodies (metal resin compositions) of Examples 1 to 47 and Comparative Examples 1 to 12 were evaluated as follows.

### [Measurement methods and evaluation methods]

### (1) Bending strain

A molded piece of 12.7 mm x 63.5 mm x 3.2 mm in thickness was produced from each crushed kneaded body, using a small desktop injection molding machine "HAAKE MiniJet" manufactured by Thermo Fisher Scientific K. K., at a cylinder temperature of 220°C. Using "Autograph (registered trademark) AGS-X" manufactured by Shimadzu Corporation, the molded piece was subjected to a three-point bending test at a bending speed of 2 mm/min, and the point at which the bending strength became maximum was adopted as a bending strain (%). In the present invention, a bending strain (%) value of 1.0(%) or more was determined to be satisfactory, and a molded piece having a bending strain (%) of 1.0(%) or more was evaluated to have an excellent bending strain property.

### (2) Fluidity

The fluidity of the crushed kneaded body was measured using a melt indexer "L241" manufactured by TAKARA INDUSTRY Co., Ltd., in accordance with ASTM-D1238, at a temperature of 190°C and at a load of 10 kg. In the present invention, a fluidity (g/10 minutes) value of 10 (g/10 minutes) or more was determined to be satisfactory, and a molded piece having a fluidity (g/10 minutes) value of 10 (g/10 minutes) or more was evaluated to have an excellent fluidity property.

**[Table 1]**

| | Examples | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| (A-1) Polyacetal resin (part by weight) | 100 | 100 | 100 | 100 | 100 | 100 | 100 | 100 | 100 | 100 | 100 | 100 |
| (A-2) Polyacetal resin (part by weight) | - | - | - | - | - | - | - | - | - | - | - | - |
| (B-1) Magnesium stearate (part by weight) | 0.15 | 0.3 | 0.5 | 1.0 | 2.5 | 5.0 | 10.0 | - | - | - | - | - |
| (B-2) Zinc stearate (part by weight) | - | - | - | - | - | - | - | 0.15 | 0.3 | 0.5 | 1.0 | 2.5 |
| (B-3) Zinc laurate (part by weight) | - | - | - | - | - | - | - | - | - | - | - | - |
| (B-4) Zinc behenate (part by weight) | - | - | - | - | - | - | - | - | | | - | - |
| (B-5) Zinc montanate (part by weight) | - | - | - | - | - | - | - | - | - | - | - | - |
| Physical properties of kneaded body (polyacetal resin composition (10% by weight) + metal powders (90% by weight)) | | | | | | | | | | | | |
| Bending strain (%) | 1.2 | 1.5 | 5.7 | 7.3 | 7.0 | 6.8 | 3.8 | 1.1 | 1.3 | 4.5 | 4.8 | 4.3 |
| Fluidity (g/10 min: 190°C · 10kg) | 14 | 15 | 22 | 49 | 69 | 72 | 29 | 16 | 20 | 26 | 52 | 231 |
| | | | | | | | | | | | | |

| | Examples | | | | | | | | | | | |
|---|---|---|---|---|---|---|---|---|---|---|---|---|
| | 13 | 14 | 15 | 16 | 17 | 18 | 19 | 20 | 21 | 22 | 23 | |
| (A-1) Polyacetal resin (part by weight) | 100 | 100 | 100 | 100 | 100 | 100 | 100 | 100 | 100 | 100 | 100 | |
| (A-2) Polyacetal resin (part by weight) | - | - | - | - | - | - | - | - | - | - | - | |
| (B-1) Magnesium stearate (part by weight) | - | - | - | - | | - | | - | | | - | |
| (B-2) Zinc stearate (part by weight) | 5.0 | 10.0 | - | - | - | - | | - | | | - | |
| (B-3) Zinc laurate (part by weight) | - | - | 0.15 | 1.0 | 10.0 | - | - | - | - | - | - | |
| (B-4) Zinc behenate (part by weight) | - | - | - | - | - | 0.15 | 1.0 | 10.0 | - | - | - | |
| (B-5) Zinc montanate (part by weight) | - | - | - | - | | - | - | - | 0.15 | 1.0 | 10.0 | |
| Physical properties of kneaded body (polyacetal resin composition (10% by weight) + metal powders (90% by weight)) | | | | | | | | | | | | |
| Bending strain (%) | 3.5 | 3.1 | 1.2 | 5.0 | 3.5 | 1.1 | 2.4 | 1.9 | 1.2 | 2.1 | 1.7 | |
| Fluidity (g/10 min: 190°C · 10kg) | 925 | 845 | 12 | 38 | 1029 | 20 | 105 | 1344 | 25 | 202 | 1525 | |

**[Table 2]**

| | Examples | | | | | | | | |
|---|---|---|---|---|---|---|---|---|---|
| | 24 | 25 | 26 | 27 | 28 | 29 | 30 | 31 | 32 |
| (A-1) Polyacetal resin (part by weight) | - | - | - | - | - | - | - | - | - |
| (A-2) Polyacetal resin (part by weight) | 100 | 100 | 100 | 100 | 100 | 100 | 100 | 100 | 100 |
| (B-1) Magnesium stearate (part by weight) | 0.15 | 0.3 | 0.5 | 1.0 | 2.5 | 5.0 | 10.0 | - | - |
| (B-2) Zinc stearate (part by weight) | - | - | - | - | - | - | - | 0.15 | 0.3 |
| Physical properties of kneaded body (polyacetal resin composition (10% by weight)+ metal powders (90% by weight)) | | | | | | | | | |
| Bending strain (%) | 1.1 | 1.2 | 3.8 | 4.3 | 4.8 | 5.3 | 3.9 | 1.5 | 4.0 |
| Fluidity (g/10 min: 190X: · 10kg) | 11 | 23 | 56 | 68 | 70 | 75 | 46 | 13 | 26 |
| | | | | | | | | | |

| | Examples | | | | | | | | |
|---|---|---|---|---|---|---|---|---|---|
| | 33 | 34 | 35 | 36 | 37 | 38 | 39 | 40 | 41 |
| (A-1) Polyacetal resin (part by weight) | - | - | - | - | - | 100 | 100 | 100 | 100 |
| (A-2) Polyacetal resin (part by weight) | 100 | 100 | 100 | 100 | 100 | - | - | - | - |
| (B-1) Magnesium stearate (part by weight) | - | - | - | - | - | 0.15 | 0.5 | 0.5 | 2.5 |
| (B-2) Zinc stearate (part by weight) | 0.5 | 1.0 | 2.5 | 5.0 | 10.0 | 0.5 | 0.15 | 0.5 | 2.5 |
| Physical properties of kneaded body (polyacetal resin composition (10% by weight)+ metal powders (90% by weight)) | | | | | | | | | |
| Bending strain (%) | 4.7 | 4.5 | 3.3 | 2.8 | 1.9 | 1.5 | 5.8 | 5.5 | 6.1 |
| Fluidity (g/10 min: 190°C · 10kg) | 58 | 126 | 521 | 555 | 1677 | 18 | 31 | 35 | 94 |

**[Table 3]**

| | Examples | | | | | |
|---|---|---|---|---|---|---|
| | 42 | 43 | 44 | 45 | 46 | 47 |
| (A-1) Polyacetal resin (part by weight) | 100 | 100 | 100 | 100 | 100 | 100 |
| (A-2) Polyacetal resin (part by weight) | - | - | - | - | - | - |
| (B-1) Magnesium stearate (part by weight) | 0.15 | 10.0 | - | - | - | - |
| (B-3) Zinc laurate (part by weight) | - | - | 0.15 | 10.0 | - | - |
| (B-4) Zinc behenate (part by weight) | - | - | - | - | 0.15 | 10.0 |
| Physical properties of kneaded body (polyacetal resin composition (30% by weight)+ metal powders (70% by weight)) | | | | | | |
| Bending strain (%) | 8.5 | 9.1 | 8.2 | 9.1 | 8.2 | 9.0 |
| Fluidity (g/10 min: 190°C · 10kg) | 278 | 465 | 260 | 633 | 285 | 410 |

**[Table 4]**

| | Comparative Examples | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| (A-1) Polyacetal resin (part by weight) | 100 | - | 100 | 100 | - | - | - | 100 | 100 | 100 | - | - |
| (A-2) Polyacetal resin (part by weight) | - | 100 | - | - | 100 | 100 | 100 | - | - | - | 100 | 100 |
| (B-1) Magnesium stearate (part by weight) | - | - | 0.01 | - | 0.01 | - | 0.01 | - | - | - | - | - |
| (B-2) Zinc stearate (part by weight) | - | - | - | 0.01 | - | 0.01 | 0.01 | - | - | - | - | - |
| (B-6) Calcium stearate (part by weight) | - | - | - | - | - | - | - | 0.15 | 0.3 | 0.6 | 0.3 | 0.6 |
| Physical properties of kneaded body (polyacetal resin composition (10% by weight) + metal powders (90% by weight)) | | | | | | | | | | | | |
| Bending strain (%) | 0.6 | 0.7 | 0.6 | 0.6 | 0.7 | 0.7 | 0.8 | 0.6 | 1.6 | 4.5 | 1.3 | 2.8 |
| Fluidity (g/10 min: 190°C - 10kg) | 1.9 | 6.9 | 2.1 | 2.1 | 2.2 | 2.0 | 2.0 | 0.9 | 2.8 | 3.2 | 5.0 | 7.5 |

As shown in Tables 1 to 3, the kneaded body (metal resin composition) comprising a polyacetal resin composition and metal powders in each of Examples 1 to 47 had two properties, namely, a bending strain of 1.0% or more and a fluidity of 10 g/10 minutes or more. On the other hand, as shown in Table 4, the kneaded body (metal resin composition) comprising a polyacetal resin composition and metal powders in each of Comparative Examples 1 to 12 did not have both of or either one of the two properties, namely, a bending strain of 1.0% or more and a fluidity of 10 g/10 minutes or more, and thus, the properties of the kneaded bodies (metal resin compositions) of Comparative Examples 1 to 12 were inferior to those of the kneaded bodies (metal resin compositions) of Examples 1 to 47, in which the polyacetal resin composition as shown in Tables 1 to 3 was used.

## Claims

1. A polyacetal resin composition that is used by being kneaded with metal powders, comprising:
100 parts by weight of a polyacetal resin (A), and
0.15 to 10.0 parts by weight of a fatty acid metal salt (B), wherein
the fatty acid metal salt (B) is fatty acid zinc, fatty acid magnesium, or a combination thereof.

2. The polyacetal resin composition according to claim 1, wherein a fatty acid of the fatty acid metal salt (B) is a fatty acid having 12 to 28 carbon atoms.

3. The polyacetal resin composition according to claim 1, wherein the fatty acid metal salt (B) is at least one selected from the group consisting of magnesium laurate, zinc laurate, magnesium stearate, zinc stearate, magnesium behenate, zinc behenate, magnesium montanate, and zinc montanate.

4. The polyacetal resin composition according to any one of claims 1 to 3, which comprises 1.0 to 10.0 parts by weight of the fatty acid metal salt (B).

5. The polyacetal resin composition according to any one of claims 1 to 4, wherein a melt flow rate of the polyacetal resin (A) is 40 to 100 g/10 minutes (2.16 kg, 190°C).

6. A metal resin composition, comprising:
the polyacetal resin composition according to any one of claims 1 to 5, and
metal powders.

7. A method for producing a polyacetal resin composition that is used by being kneaded with metal powders, comprising:
a step of melt-kneading 100 parts by weight of a polyacetal resin (A) and 0.15 to 10.0 parts by weight of a fatty acid metal salt (B), wherein
the fatty acid metal salt (B) is fatty acid zinc, fatty acid magnesium, or a combination thereof.

8. A method for producing a powder injection molded product, comprising a step of injecting a kneaded body obtained by melt-kneading metal powders and a binder resin composition into a mold, wherein
the binder resin composition is the polyacetal resin composition according to any one of claims 1 to 5.
